# EUROPÄISCHE PATENTANMELDUNG

(11) **EP 2 412 471 A2**
(43) Veröffentlichungstag der Anmeldung: **01.02.2012**
(21) Anmeldenummer: 11175714.2
(22) Anmeldetag: 28.07.2011
(51) Int. Cl.: B23K 26/38, B23K 26/04

(54) **Verfahren und Vorrichtung zum thermischen Bearbeiten eines Werkstücks mittels Laserstrahl**

(30) Priorität: 30.07.2010 DE 102010032958
(71) Anmelder: Messer Cutting Systems GmbH, 64823 Gross-Umstadt (DE)
(72) Erfinder: Eck, Karl, 64823 Gross-Umstadt (DE)
(74) Vertreter: Staudt, Armin Walter

(57) **Zusammenfassung**

Beim thermischen Schneiden eines Werkstücks mittels Laserstrahl wird dieser mittels einer Laserquelle erzeugt und einem bewegbaren Laserkopf zugeführt. In dem Laserkopf ist ein optisches Umlenkelement vorgesehen, mittels dem der Laserstrahl so umgelenkt wird, dass er ― in Bearbeitungsrichtung gesehen - mit der Laserkopf-Längsachse einen Verkippungswinkel (α) ungleich 0 Grad einschließt. Um hiervon ausgehend die Erzeugung der Neigung des kollimierten Laserstrahls zur Vertikalen mit möglichst geringer Zahl optischer Bauteile zu realisieren, wird erfindungsgemäß vorgeschlagen, dass der Laserstrahl dem Laserkopf mittels einer optischen Faser zugeführt und der Laserstrahl kollimiert wird, das Umlenkelement seitlich versetzt zur Laserkopf-Längsachse durchläuft und mittels diesem auf die Werkstück-Oberfläche umgelenkt und gleichzeitig fokussiert wird.

## Beschreibung

Die Erfindung betrifft ein Verfahren zum thermischen Bearbeiten, insbesondere zum thermischen Schneiden, eines Werkstücks mit einem Laserstrahl, welcher mittels einer Laserquelle erzeugt und einem eine Längsachse aufweisenden und relativ zur Oberfläche des Werkstücks in Bearbeitungsrichtung bewegbaren Laserkopf zugeführt wird, und über eine Düse in Richtung auf das Werkstück austritt, wobei in dem Laserkopf mindestens ein optisches Umlenkelement vorgesehen ist, mittels dem der Laserstrahl so umgelenkt wird, dass er ― in Bearbeitungsrichtung gesehen - mit der Flächennormalen auf die Werkstück-Oberfläche einen Verkippungswinkel (α) ungleich 0 Grad einschließt.

Weiterhin betrifft die Erfindung eine Vorrichtung zur thermischen Bearbeitung eines Werkstücks mit einem Laserstrahl, insbesondere zum thermischen Schneiden, umfassend eine Laserquelle zur Erzeugung des Laserstrahls, einem eine Längsachse aufweisenden Laserkopf, der relativ zur Oberfläche des Werkstücks in Bearbeitungsrichtung bewegbar ausgebildet ist, und der mit einer Düse versehen ist, durch welche der Laserstrahl in Richtung auf das Werkstück austritt, wobei der Laserkopf mindestens ein optisches Umlenkelement enthält, mittels dem der Laserstrahl so umlenkbar ist, dass er mit der Laserkopf-Längsachse einen Verkippungswinkel (α) ungleich 0 Grad einschließt.

Die thermische Bearbeitung des Werkstücks umfasst das Schneiden, Schweißen, Markieren, Härten, Profilieren oder Abtragen der Oberfläche. Das thermische Schneiden von Werkstücken erfolgt in der Regel durch den kombinierten Einsatz eines fokussierten Laserstrahls und eines Gasstrahls. Dabei wird je nach Trennmechanismus zwischen Laserstrahl-Schmelzschneiden, Laserstrahl-Verdampfungsschneiden oder Laser-Brennschneiden unterschieden.

Weit verbreitet ist das Laserstrahl-Schmelzschneiden. Dabei erfolgt die Materialtrennung, indem der Werkstoff durch die Heizleistung des Laserstrahls im Bereich der Schneidfront aufgeschmolzen und durch den gleichzeitigen Impulsübertrag des Schneidgasstrahls aus der Schnittfuge ausgetrieben wird. Es werden Hochleistungslaser, insbesondere CO₂-, Faser-, Scheiben- und Diodenlaser eingesetzt, wobei überwiegend zirkular polarisierte oder unpolarisierte Laserstrahlung verwendet wird, um eine Richtungsabhängigkeit im Absorptionsverhalten bei Konturschnitten zu vermeiden.

### Stand der Technik

Im Hinblick auf den Gesamtwirkungsgrad sollte der Schneidprozess darauf ausgerichtet sein, die Laserleistung nicht senkrecht, sondern unter einem Winkel auf die zu bearbeitende Werkstückoberfläche einzustrahlen. Denn es zeigt sich ein ausgeprägtes Maximum im Absorptionsgrad für einen bestimmten Wert des Laserstrahl-Einfallswinkels, der etwa dem Polarisationswinkel (oder: "Brewster-Winkel") ϕ_{Br} entspricht, und der vom Werkstoff und den Prozessparametern abhängt beispielsweise für Strahlung einer Wellenlänge von ca. 1 µm im Bereich um 85 Grad liegt.

Der Einfallswinkel ist dabei der Winkel zwischen der Schmelzfront und der optischen Achse des Laserstrahls, und der Brewster-Winkel ist derjenige werkstoffspezifische Winkel, bei dem von einfallendem, unpolarisiertem Licht einer gegebenen Wellenlänge nur die senkrecht zur Einfallsebene polarisierten Anteile reflektiert werden.

Wird das Laserstrahl-Schmelzschneiden mit konstanten Prozessparametern durchgeführt, bildet sich in der Schnittfuge eine quasistationäre Schneidfront mit einem materialspezifischen Neigungswinkel ϕ_{c} aus, so dass auch ein senkrecht auf die Werkstückoberfläche ausgerichteter Laserstrahl unter einem bestimmten Einfallswinkel ϕᵢₙ auf die Schneidfront auftrifft. Der Einfallswinkel hängt im Wesentlich vom Fokusradius des Laserstrahls (und damit von der Laserwellenlänge), vom Ort des Fokus und von der Strahlkaustik sowie der Dicke des zu schneidenden Werkstücks ab und er hat aus dem oben genannten Grund maßgeblichen Einfluss auf die Absorption der eingestrahlten Laserleistung. Er lässt sich jedoch nicht frei einstellen.

Insbesondere bei Verwendung von Laserstrahlquellen mit kurzer Wellenlänge (beispielsweise um 1 µm) kann sich ein nicht optimaler Neigungswinkel ϕ_{c} der Schneidfront einstellen, was zu einer Verringerung der absorbierten Laserleistung und damit zu einer Verschlechterung der Prozesseffizienz führt.

Um dem entgegenzuwirken, wird in der DE 10 2008 053 397 A1 vorgeschlagen, den Neigungswinkel ϕ_{c} der Schneidfront zu verringern, und zwar durch Veränderung der Geometrie des Laserstrahls (Strahlformung) und/oder durch eine der gleichförmigen Relativbewegung zwischen Laserstrahl und Werkstück überlagerte nichtlineare oszillierende Auslenkung des Laserstrahls und eine damit verbundene Bewegung seines Brennpunktes.

Dadurch soll erreicht werden, dass der Neigungswinkel ϕ_{c} der Schneidfront laufend so verändert wird, dass der Einfallswinkel ϕᵢₙ auf die Schneidfront innerhalb eines Intervalls um den Brewster-Winkel ϕ_{Br} liegt. Die Einflussnahme auf die Schneidfrontgeometrie erfolgt durch Strahlformung des Laserstrahls, indem dieser mit einem rechteckigen oder ovalen Strahlquerschnitt erzeugt wird.

Erfolgt diese Strahlformung durch Einsatz von Blenden oder Masken, so wird ein Teil der Strahlungsleistung abgeschnitten und steht nicht für den Schneidprozess zur Verfügung. Laser mit rechteckigem oder ovalem Strahlquerschnitt sind schwierig herzustellen und teuer.

Anstelle eines zur Werkstück-Oberfläche orthogonal ausgerichteten Laserstrahls können auch Einrichtungen eingesetzt werden, die eine Verkippung des Laserkopfes ermöglichen. Ein derartiges Verfahren ist beispielsweise aus der DE 10 2008 030 783 B3 bekannt. Derartige Einrichtungen zum Laserstrahlschrägschneiden werden beispielsweise zum Fasenschneiden eingesetzt und sind für große Verkippungswinkel ausgelegt und dementsprechend groß und teuer.

Dabei tritt auch das Problem auf, dass die Medienzufuhrleitungen sowie der Antrieb für die Verstellung des Fasenwinkels um mehr als +/- 360° drehbar sein müssen. Die Medienzufuhrleitungen werden dabei entweder verdrillt oder die Medien- und Stromzufuhr wird rotatorisch von der Drehbewegung entkoppelt, beispielsweise über Drehdurchführungen. Drehdurchführungen für Gase oder elektrischen Strom sind jedoch störanfällig und teuer: Für die Verkippung des Laserkopfes ist ein separater Antrieb erforderlich, der mitgedreht werden muss, was das Aggregat insgesamt schwer und weniger dynamisch macht.

Bei den vorstehend erläuterten Bearbeitungsverfahren wird ein Laserstrahl mittels einer Laserstrahlquelle erzeugt und einem Laserkopf zugeführt. Im Gehäuse des Laserkopfes sind zur Fokussierung des Laserstrahls erforderlichen Bauteile geschützt untergebracht. So befinden sich die Linse, mittels der der Laserstrahl auf das Werkstück fokussiert und eine zur Zufuhr des Schneidgases dienende Düse in der Regel innerhalb des Laserkopfes.

Ein dazu alternatives Verfahren zum thermischen Bearbeiten eines Werkstücks mittels schräg auf die Werkstückoberfläche auftreffenden Laserstrahls ist in der DE 103 31 695 A1 beschrieben. Bei dem darin vorgeschlagenen Verfahren wird auf einen Laserkopf verzichtet. Der Laserstrahl wird kollimiert und mehrfach an optischen Umlenkelementen reflektiert, wobei er durch die letzte Reflexion auf das Werkstück gerichtet wird, und zwar schräg in einem Winkel ungleich 90 Grad. Durch die Mehrfach-Reflexion des Laserstrahls und dessen Schrägstellung soll eine Anordnung der optischen Umlenkelemente mit großem Abstand und in einer Orientierung zum Werkstück ermöglicht werden, die einen Niederschlag von Abtragprodukten auf den optisch wirksamen Flächen der Umlenkelemente vermindert.

Eine scharfe und zielgenaue Abbildung des Laserstrahls auf dem Werkstück erfordert jedoch einen hohen Aufwand für Montage und Justierung der Umlenkelemente. Ein Beschlagen und Verschmutzen der optischen Reflexionsflächen kann unter den rauen Arbeitsbedingungen in der Praxis nicht ganz vermieden werden. Zudem erfordert die Anordnung eine gewisse Höhe des Freiraums oberhalb der Bearbeitungsebene, der aber häufig nicht zur Verfügung steht.

Eine Vorrichtung dieser Art ist auch aus der EP 1 698 426 A1 bekannt. Darin wird zum Laserschneiden konischer Bohrungen mittels schräg auf die Werkstück-Oberfläche einfallendem Laserstrahl vorgeschlagen, dass der kollimierte, parallele Laserstrahl einen Glaszylinder durchläuft, der zwischen zwei optischen Wellenplatten (λ/4-Plättchen) verkippt zur Laserstrahlachse angeordnet ist. Von der rückwärtigen Wellenplatte gelangt der Laserstrahl auf einen schräg gestellten Spiegel und von dort auf eine Sammellinse, die den Strahl auf das Werkstück fokussiert. Der Neigungswinkel des Laserstrahls zur optischen Achse wird durch den Grad der Verkippung des Glaszylinders verändert. Durch Rotation des Glaszylinders beschreibt der geneigte Laserstrahl im Fokus einen Hüllkreis um die optische Achse.

Ein Laserschneidverfahren und eine Vorrichtung der eingangs genannten Gattung sind aus der JP 06 039 571 A bekannt. Ein kollimierter, paralleler Laserstrahl wird dem Laserkopf über einen Spiegel koaxial zugeführt und tritt durch ein im Laserkopf angeordnetes, verkippbares Umlenkelement hindurch, bevor er mittels einer Sammelline in schrägem Winkel auf die Werkstück-Oberfläche fokussiert wird. Zur Einstellung des Verkippungsgrades von Umlenkelement und Gasaustrittsdüse sind Stellschrauben vorgesehen. Umlenkelement und Gasaustrittsdüse sind innerhalb des Laserkopfes (bei feststehendem Laserkopf) rotierbar gelagert.

Bei der aus der US 5.059,759 A bekannten Laserschneidvorrichtung ist der Laserdüse konstruktionsbedingt zur Vertikalen geneigt. Der kollimierte und parallele Laserstrahl tritt in den hohlen Laserkopf in vertikaler Richtung ein und er tritt koaxial zur Laserdüsen-Mittelachse aus. Um die Verkippung des Laserstrahls innerhalb des Laserkopfes zu erreichen, sind innerhalb desselben Spiegel angeordnet. Der erste Spiegel erzeugt eine Verkippung des Laserstrahls um 90 Grad und der zweite Spiegel erzeugt die vorgegebene Verkippung von mindestens 10 Grad zur Vertikalen. Der so verkippte Laserstrahl trifft auf eine Sammellinse und wird mittels dieser auf das Werkstück fokussiert.

Bei den drei zuletzt erläuterten Vorrichtungen und Verfahren wird dem Laserkopf ein bereits parallelisierter Laserstrahl zugeführt. Diese Strahl-Parallelisierung erfolgt üblicherweise mittels einer vorgeschalteten Kollimatoroptik. Um die Neigung des Laserstrahls zur Vertikalen zu bewirken, durchläuft der Laserstrahl anschließend eine Vielzahl weiterer optischer Bauteile, um zuletzt mittels der Sammellinse auf das Werkstück fokussiert zu werden.

### Technische Aufgabenstellung

Mit der Anzahl der optischen Bauteile zur Realisierung der Neigung des kollimierten Laserstrahls steigen Material-, Konstruktions- und Justageaufwand. Maßabweichungen, Justagefehler, Streuung und Absorption der Laserstrahlung in den Bauteilen und an Oberflächen führen zu Transmissionsverlusten und damit einhergehend zur Erwärmung der Bauteile. Diese Erwärmung, ebenso wie allmähliche Schädigungen der optischen Bauteile durch energiereiche Laserstrahlung und Verschmutzungen der Oberflächen im Betrieb können wiederum zu einer Verschlechterung der Abbildungseigenschaften und zu weiteren Transmissionsverlusten und zu einem erhöhten Wartungsbedarf der Vorrichtung führen.

Es ist daher wünschenswert, den Neigungswinkel des kollimierten Laserstrahls zur Vertikalen mit einer möglichst geringen Anzahl optischer Bauteile realisieren zu können.

Der Erfindung liegt daher die Aufgabe zugrunde, ein Verfahren zum thermischen Bearbeiten von Werkstücken mit Laserstrahlung anzugeben, das bei geringem apparativem Aufwand und Wartungsbedarf einen hohen Absorptionsgrad für die Laserstrahlung ermöglicht, und das sich durch eine geringe Störanfälligkeit auszeichnet.

Weiterhin liegt der Erfindung die Aufgabe zugrunde, eine zur Durchführung des Verfahrens geeignete Vorrichtung bereitzustellen, die zur Erzeugung der Neigung des kollimierten Laserstrahls zur Vertikalen eine geringe Zahl optischer Bauteile erfordert.

### Allgemeine Darstellung der Erfindung

Hinsichtlich des Verfahrens wird diese Aufgabe ausgehend von einem Verfahren der eingangs genannten Gattung erfindungsgemäß dadurch gelöst, dass der Laserstrahl dem Laserkopf mittels einer optischen Faser zugeführt und der Laserstrahl kollimiert wird, das Umlenkelement seitlich versetzt zur Laserkopf-Längsachse durchläuft und mittels diesem auf die Werkstück-Oberfläche umgelenkt und gleichzeitig fokussiert wird.

Die Erfindung betrifft eine Weiterbildung eines thermischen Bearbeitungsverfahrens unter Einsatz eines Laserkopfs, der relativ zu dem zu bearbeitenden Werkstück bewegt wird und dieses mit dem aus dem Laserkopf austretenden Laserstrahl bearbeitet wird, beispielsweise durch Schneiden, Schweißen, Markieren, Härten, Profilieren oder Abtragen der Oberfläche. Im Folgenden wird die Erfindung stellvertretend für alle Bearbeitungsverfahren am Beispiel des "Laserschneidens" näher erläutert.

Der Laserstrahl trifft nicht orthogonal, sondern schräg auf die Werkstück-Oberfläche auf und schließt mit der Flächennormalen einen Winkel α ein. Die Neigung des Laserstrahls in der Bewegungsrichtung ist dabei so, dass sich ein "stechendes oder abhebendes Schneiden" mit einem "vorauseilenden" Laserstrahl ergibt.

Ein im Bereich des Winkels α schräg auf der Oberfläche auftreffender Laserstrahl ermöglicht wegen bessere Absorption der Laserenergie eine höhere Schnittgeschwindigkeit, eine größere Schneidtiefe und eine bessere Schnittqualität. Der Verkippungswinkel α liegt im Bereich des für den Werkstoff spezifischen Brewster-Winkels, muss diesem aber nicht exakt entsprechen. Typischerweise liegt der Winkel α im Bereich von 1 bis 10 Grad und ist damit relativ klein.

Anstatt der beim Fasenschneiden üblichen Schrägstellung des Laserkopfes wird der Laserstrahl innerhalb des Laserkopfes mittels eines optischen Umlenkelements so verändert, dass er gegenüber der Vertikalen verkippt aus der Düse des Laserkopfes austritt und schräg auf die zu bearbeitende Oberfläche auftrifft. Der Laserstrahl tritt demnach in den Laserkopf ein, durchläuft innerhalb des Laserkopfes eine Strahlführungseinrichtung, die eine Umlenkung des Laserstrahls und sein schräges Auftreffen auf der Oberfläche des zu bearbeitenden Werkstücks bewirkt.

Da die Schrägstellung des Laserstrahls auf optischem Wege und innerhalb des Laserkopfes erfolgt, sind keine verschleißenden Drehdurchführungen notwendig. Da das Umlenkelement innerhalb des Laserkopfes angeordnet ist, werden ein Beschlagen oder Verschmutzen aufgrund von Abtragprodukten der Werkstückbearbeitung vermieden.

Ein Motor zur Realisierung einer Verkippung des Laserkopfes ist nicht erforderlich. Stattdessen ist zur Ausführung von Schnittkonturen eine Rotierbarkeit des zur Längsachse verkippten Laserstrahls um die Längsachse zu gewährleisten. Die Laserkopf-Längsachse entspricht dabei gleichzeitig der Rotationsachse und sie verläuft in der Regel senkrecht zur Oberfläche des zu bearbeitenden Werkstücks.

Diese Rotierbarkeit gewährleistet auch bei schräg auftreffendem Laserstrahl eine gleich bleibende Relation zwischen der Schnittrichtung und der Auftreffrichtung des Laserstrahls. Sie kann erreicht werden, indem der gesamte Laserkopf mitsamt der Strahlführungseinrichtung um die Längsachse rotiert wird, oder indem nur die Strahlführungseinrichtung oder ein Teil davon um die Längsachse rotierbar ist. Die letztgenannte Verfahrensweise ermöglicht ein feststehendes Laserkopf-Gehäuse, was die Gaszufuhr für das Schneidgas vereinfacht. Daher wird eine Verfahrensweise bevorzugt, bei der der Laserkopf ein Gehäuse aufweist, innerhalb dem mindestens ein Teil des Umlenkelements rotierbar gelagert ist.

Im Unterschied zum Stand der Technik wird der Laserstrahl dem Laserkopf beim erfindungsgemäßen Laserschneidverfahren mittels optischer Faser zugeführt. Die optische Faser kann Bestandteil eines Faserbündels sein. Der von der optischen Faser ausgehende Laserstrahl ist in der Regel stark divergierend und wird mittels Kollimator zu einem parallelen Strahlenbündel geformt. Aufwändige optische Spiegel-Konstruktionen zur Strahlformung und -nachführung können entfallen. Insoweit stellt die Laserstrahl-Zufuhr mittels Faser bereits eine erste Maßnahme zur Verminderung der Anzahl erforderlicher optischer Bauteile dar.

Eine zweite Maßnahme besteht darin, den kollimierten Laserstrahl dem Umlenkelement zuzuführen und mittels diesem den Laserstrahl nicht nur auf die Werkstück-Oberfläche umzulenken, sondern gleichzeitig zu fokussieren. Für Umlenkung und Fokussierung des Laserstrahle wird somit nur ein optisches Bauteil benötigt, was letztlich dadurch erreicht wird, dass der Laserstrahl das Umlenkelement nicht koaxial, sondern seitlich versetzt zur Laserkopf-Längsachse durchläuft.

Die Erfindung ermöglicht somit eine deutliche Reduzierung der zur Strahlführung und ―formung erforderlichen optischen Bauteile im Vergleich zum Stand der Technik. Nach dem Kollimieren des Laserstrahls ist lediglich noch ein einziges Bauteil zur Umlenkung und Fokussierung erforderlich ― nämlich das Umlenkelement.

Das Umlenkelement besteht im einfachsten Fall aus einem einzigen optischen Bauteil. Bei einer ersten vorteilhaften Verfahrensvariante ist vorgesehen, dass das Umlenkelement eine Fokussierlinse umfasst, welche der kollimierte Laserstrahl versetzt zur Laserkopf-Längsachse durchläuft und dabei auf die Werkstück-Oberfläche umgelenkt und gleichzeitig fokussiert wird, wobei die Fokussierlinse eine Linsen-Hauptachse aufweist, die koaxial zur Laserkopf-Längsachse verläuft.

Bei der Fokussierlinse handelt es sich vorzugsweise um eine Konvex-KonvexLinse oder um eine Plan-Konvexlinse. Wichtig ist, dass der Laserstrahl die Fokussierlinse außermittig durchläuft, also außerhalb der eigentlichen Linsen-Hauptachse, so dass er aufgrund der optischen Brechung eine Ablenkung in Richtung auf die Linsen-Hauptachse erfährt. Dadurch können die erforderliche Fokussierung des Laserstrahls auf den Bereich des Werkstücks und gleichzeitig die gewünschte Verkippung bewirkt werden. Der Ort der Fokuslage ist dabei von der Art der Bearbeitung abhängig. Der Fokus kann über oder auf der Oberfläche des Werkstücks liegen, ebenso im Werkstück oder darunter.

Bei dieser Verfahrensweise hat es sich als vorteilhaft erwiesen, wenn der Laserstrahl dem Laserkopf seitlich versetzt zur Laserkopf-Längsachse zugeführt wird.

Durch den seitlichen Eintritt des Laserstrahls trifft er ohne weitere Umlenkung außermittig auf die Fokussierlinse, auch wenn diese innerhalb des Laserkopfes so angeordnet ist, dass ihre Linsen-Hauptachse koaxial zur Laserkopf-Längsachse verläuft.

Zwecks Ablenkung des Laserstrahls kann die Fokussierlinse zur Einfallsrichtung des Laserstrahls und zur Laserkopf-Längsachse verkippt sein. Dies erfordert jedoch ein Mitdrehen der Fokussierlinse bei Drehung der Strahlführungseinrichtung oder des Laserkopfes. Dies wird bei einer Verfahrensweise vermieden, bei der die Fokussierlinse eine Linsen-Hauptachse aufweist, die koaxial zur Laserkopf-Längsachse verläuft. Die Fokussierlinse ist hierbei zentral innerhalb des Laserkopfes angeordnet. Sie verläuft rotationssymmetrisch um die Längsachse des Laserkopfes, so dass sie den parallel und seitlich versetzt zur Längsachse auftreffenden Laserstrahl stets in gleichem Winkel in Schnittrichtung ablenkt, und zwar auch dann, wenn sie nicht zusammen mit dem Laserkopf oder der Strahlführungseinrichtung rotiert wird. Daher kann bei dieser Ausführungsform die Fokussierlinse mit ihrer Fassung auch so im Laserkopf integriert sein, dass sie den unteren, dem Werkstück zugeordneten Laserkopf-Innenraum gegenüber dem oberen Laserkopf-Innenraum abdichtet, Dies ermöglicht es, das Schneidgas ohne zusätzliche Dichtung in den unteren Innenraum einzuleiten und der Düse zuzuführen, was die Gaszufuhr besonders bei feststehendem Laserkopf-Gehäuse erleichtert.

Der Laserstrahl wird dem Laserkopf über eine optische Faser zugeführt. Dies ermöglicht eine einfachere und weniger störanfällige Konstruktion der Vorrichtung als bei der Strahlzuführung über ein Spiegelsystem. Tritt die optische Faser (worunter im Folgenden auch ein Faserbündel verstanden wird) seitlich versetzt zur Laserkopf-Längsachse in den Laserkopf ein, ergibt sich das Problem der Verdrillung beim Drehen der Strahlführungseinrichtung oder des gesamten Laserkopfes um die Längsachse.

Um dem zu entgehen, hat es sich bei Verfahrensmodifikationen, bei denen der Laserstrahl dem Laserkopf mittels der optischen Faser über eine Durchführung zugeführt wird, als vorteilhaft erweisen, wenn diese ein Getriebe mit einem koaxial zur Laserkopf-Längsachse rotierbaren Antriebsrad umfasst, welches in einer 1:1-Getriebeübersetzung mit einem Abtriebsrad mit parallel zur Laserkopf-Längsachse verlaufender Abtriebswelle verbunden ist, wobei die optische Faser in einem Bogen von der Laserkopf-Längsachse über die Abtriebswelle in den Laserkopf geführt ist.

Das Getriebe umfasst ein in der Laserkopf-Längsachse rotierbares Antriebsrad und ein Abtriebsrad mit gleichem Durchmesser, so dass sich für das Getriebe eine 1:1-Übersetzung ergibt. Die Verbindung dieser Getriebeteile erfolgt beispielsweise über ein Zugmittel, wie etwa einen Riemen. Die Zufuhr der optischen Faser zum Laserkopf verläuft zunächst koaxial zu dessen Längsachse und beschreibt dann einen Bogen zur Welle des Abtriebsrades, über die sie parallel zur Laserkopf-Längsachse verlaufend in den Laserkopf eingeführt wird. Diese Art der Durchführung in Verbindung mit der 1:1-Getriebeübersetzung verhindert ein Verdrillen der Faser beim Drehen der Strahlführungseinrichtung um die Längsachse.

Vorzugsweise wird der Laserstrahl bei dieser Verfahrensvariante in einem Kollimator kollimiert, der innerhalb der Laserkopfes und seitlich versetzt zur Laserkopf-Längsachse angeordnet ist.

Der Kollimator ist in Richtung der Laserstrahls gesehen der Fokussierlinse vorgeordnet. Er besteht aus einem oder mehreren optischen Bauteilen und bewirkt eine Parallelisierung des Laserstrahls, so dass ein paralleler Laserstrahl unmittelbar seitlich versetzt auf die Fokussierlinse auftrifft, also ohne weitere Umlenkung des parallelen Laserstrahls. Die optischen Hauptachsen von Kollimator und Fokussierlinse verlaufen dabei parallel zueinander.

Bei einer anderen, ebenfalls vorteilhaften Verfahrensvariante ist vorgesehen, dass das Umlenkelement mindestens eine konkave gekrümmte spiegelnde Fläche und dieser gegenüberliegend eine konvex gekrümmte spiegelnde Fläche aufweist, wobei der kollimierte Laserstrahl an der konkav gekrümmten Fläche durch Totalreflexion auf die Werkstück-Oberfläche umgelenkt und dabei gegenüber der Laserkopf-Längsachse verkippt und gleichzeitig infolge der Flächenkrümmung fokussiert wird.

Die konkav gekrümmte, spiegelnde Fläche wirkt dabei wie eine Sammellinse für den kollimierten Laserstrahl und bewirkt so eine Fokussierung auf den Bereich des Werkstücks (also je nach Art der Bearbeitung auf oder über die Werkstück-Oberfläche, in das Werkstück oder unter das Werkstück), wobei gleichzeitig durch die Krümmung und Ausrichtung der die gewünschte Verkippung des Laserstrahls bewirkt wird. Die Spiegelfläche weist somit zwei sich überlagernde Krümmungen auf, die die Fokussierung und die Verkippung des Laserstrahls bewirken. Dadurch wird auch bei dieser Ausführungsform des erfindungsgemäßen Verfahrens die Anzahl der erforderlichen optischen Bauteile zur Fokusiierung und Umlenkung des Laserstrahls minimiert; im Idealfall auf ein Einziges. Das Umlenkelement weist dabei gegenüberliegend zur konkav gekrümmten spiegelnden Fläche eine konvex gekrümmte spiegelnde Fläche auf, so dass der Laserstrahl auch bei zentralem Eintritt seitlich versetzt zur Laserkopf-Längsachse verläuft und durch Mehrfachreflexion zwischen den gekrümmten spiegelnden Flächen auf die Werkstück-Oberfläche fokussiert und dabei gegenüber der Laserkopf-Längsachse verkippt wird.

Die konvex gekrümmte Spiegelfläche wirkt als Zerstreuungslinse. Das Zusammenspiel von konkav und konvex gekrümmten Spiegelflächen bewirkt eine Verkippung und eine Fokussierung des Laserstrahls, auch wenn dieser koaxial zur Laserkopf-Längsachse in den Laserkopf eintritt. Dadurch erübrigt sich die Problematik des Verdrillens, auch wenn wie hier die Zufuhr des Laserstrahls mittels einer optischen Faser erfolgt.

Die konkav und konvex gekrümmten Spiegelflächen können als separate Bauteile ausgeführt sein. Bei einer besonders bevorzugten Ausgestaltung dieser Verfahrensvariante bilden die konkav und konvex gekrümmten, spiegelnden Flächen jedoch die Innenwandung eines gekrümmten optischen Hohlleiters.

Dadurch ergibt sich eine feste, unveränderliche örtliche Lage der Flächen zueinander, was den Montage- und Justieraufwand und die Störanfälligkeit der Vorrichtung verringert. Die Innenwandung des Hohlleiters ist für eine Totalreflexion des Laserstrahls ausgelegt und geometrisch so ausgeführt, dass sie ein Umlenken des Laserstrahls mit dem gewünschten Neigungswinkel und gleichzeitig eine Fokussierung des Laserstrahls ergibt. Auf eine zusätzliche Fokussierlinse kann dabei verzichtet werden, was den Aufwand für Montage und Justierung weiter verringert.

Die Innenwandung des Hohlleiters bildet gleichzeitig die konkav als auch die konvex gekrümmten Spiegelflächen.

Hinsichtlich der Vorrichtung wird die oben angegebene Aufgabe ausgehend von einer Vorrichtung der eingangs genannten Gattung erfindungsgemäß dadurch gelöst, dass zur Zuführung des Laserstrahls zum Laserkopf eine optische Faser und zur Kollimierung des Laserstrahls ein Kollimator vorgesehen sind, und dass der Laserstrahl das Umlenkelement seitlich versetzt zur Laserkopf-Längsachse durchläuft, wobei das Umlenkelement geeignet ist, den Laserstrahl auf die Werkstück-Oberfläche umzulenken und gleichzeitig zu fokussieren. Die erfindungsgemäße Vorrichtung dient zur thermischen Bearbeitung eines Werkstücks unter Einsatz eines Laserkopfs, der relativ zu dem zu bearbeitenden Werkstück bewegt wird und dieses mit dem aus dem Laserkopf austretenden Laserstrahl bearbeitet wird, beispielsweise zum Schneiden, Schweißen, Markieren, Härten, Profilieren oder Abtragen der Oberfläche. Im Folgenden wird die Erfindung stellvertretend für alle Bearbeitungsverfahren am Beispiel eines Laserkopfes zum "Laserschneiden" näher erläutert.

Der Laserstrahl trifft schräg aus dem Laserkopf aus und schließt mit der Laserkopf-Längsachse, die bei senkrechter Orientierung zur Werkstückoberfläche der Flächennormalen auf die Werkstückoberfläche entspricht, einen Verkippungswinkel α ein, der im Bereich des für den Werkstoff spezifischen Brewster-Winkels liegt, diesem aber nicht exakt entsprechen muss. Typischerweise liegt der Winkel α im Bereich von 1 bis 10 Grad und ist damit relativ klein.

Ein im Bereich des Winkels α schräg auf der Oberfläche auftreffender Laserstrahl ermöglicht wegen besserer Absorption der Laserenergie eine höhere Schnittgeschwindigkeit, eine größere Schneidtiefe und eine bessere Schnittqualität.

Anstatt der beim Fasenschneiden üblichen Schrägstellung des Laserkopfes wird der Laserstrahl innerhalb des Laserkopfes mittels eines optischen Umlenkelements so verändert, dass er gegenüber der Vertikalen verkippt aus der Düse des Laserkopfes austritt und schräg auf die zu bearbeitende Oberfläche auftrifft. Der Laserstrahl tritt demnach in den Laserkopf ein, durchläuft innerhalb des Laserkopfes eine Strahlführungseinrichtung, die eine Umlenkung des Laserstrahls und sein schräges Auftreffen auf der Oberfläche des zu bearbeitenden Werkstücks bewirkt.

Da die Schrägstellung des Laserstrahls auf optischem Wege und innerhalb des Laserkopfes erfolgt, sind keine verschleißenden Drehdurchführungen notwendig, so dass Kosten vermindert und die Störanfälligkeit der Vorrichtung verringert werden kann. Da das Umlenkelement innerhalb des Laserkopfes angeordnet ist, werden ein Beschlagen oder Verschmutzen aufgrund von Abtragprodukten der Werkstückbearbeitung vermieden.

Ein Motor zur Realisierung einer Verkippung des Laserkopfes ist nicht erforderlich. Stattdessen ist zur Ausführung von Schnittkonturen eine Rotierbarkeit des um die Längsachse verkippten Laserstrahls zu gewährleisten. Die Laserkopf-Längsachse entspricht dabei gleichzeitig der Rotationsachse und sie verläuft in der Regel senkrecht zur Oberfläche des zu bearbeitenden Werkstücks.

Diese Rotierbarkeit gewährleistet auch bei schräg auftreffendem Laserstrahl eine gleich bleibende Relation zwischen der Schnittrichtung und der Auftreffrichtung des Laserstrahls. Sie kann erreicht werden, indem der gesamte Laserkopf mitsamt der Strahlführungseinrichtung um die Längsachse rotierbar ist, oder indem nur die Strahlführungseinrichtung oder ein Teil davon um die Längsachse rotierbar ist.

Im Unterschied zum Stand der Technik wird der Laserstrahl dem Laserkopf bei der erfindungsgemäßen Laserschneid-Vorrichtung mittels optischer Faser zugeführt. Die optische Faser kann Bestandteil eines Faserbündels sein. Der von der optischen Faser ausgehende Laserstrahl ist in der Regel stark divergierend. Er durchläuft anschließend einen Kollimator und wird so zu einem parallelen Strahlenbündel geformt. Aufwändige optische Spiegel-Konstruktionen zur Strahlformung und -nachführung, können entfallen. Insoweit stellt die Laserstrahl-Zufuhr mittels Faser bereits eine erste Maßnahme zur Verminderung der Anzahl erforderlicher optischer Bauteile dar.

Eine zweite Maßnahme besteht darin, den kollimierten Laserstrahl einem Umlenkelement zuzuführen, das nicht nur geeignet ist, den Laserstrahl auf die Werkstück-Oberfläche umzulenken, sondern diesen auch gleichzeitig zu fokussieren. Für Umlenkung und Fokussierung des kollimierten Laserstrahls wird somit nur ein einziges optisches Bauteil benötigt, was letztlich dadurch erreicht wird, dass der Laserstrahl das Umlenkelement nicht koaxial, sondern seitlich versetzt zur Laserkopf-Längsachse durchläuft.

Die Erfindung ermöglicht somit eine deutliche Reduzierung der zur Strahlführung und ―formung erforderlichen optischen Bauteile im Vergleich zum Stand der Technik. Nach dem Kollimieren des Laserstrahls ist lediglich noch ein einziges Bauteil zur Umlenkung und Fokussierung erforderlich ― nämlich das Umlenkelement.

Vorteilhafte Ausgestaltungen der erfindungsgemäßen Vorrichtung ergeben sich aus den Unteransprüchen. Soweit in den Unteransprüchen angegebene Ausgestaltungen der Vorrichtung den in Unteransprüchen zum erfindungsgemäßen Verfahren genannten Verfahrensweisen nachgebildet sind, wird zur ergänzenden Erläuterung auf die obigen Ausführungen zu den entsprechenden Verfahrensansprüchen verwiesen. Die in den übrigen Unteransprüchen genannten Ausgestaltungen der erfindungsgemäßen Vorrichtung werden nachfolgend näher erläutert.

Bei einer bevorzugten Ausführungsform der erfindungsgemäßen Vorrichtung umfasst das Umlenkelement eine Fokussierlinse, welche der kollimierte Laserstrahl versetzt zur Laserkopf-Längsachse durchläuft und dabei auf die Werkstück-Oberfläche umgelenkt und gleichzeitig fokussiert wird. Der Laserstrahl wird dabei dem Laserkopf seitlich versetzt zur Laserkopf-Längsachse mittels einer optischen Faser über eine Durchführung zugeführt, die ein Getriebe mit einem koaxial zur Laserkopf-Längsachse rotierbaren Antriebsrad umfasst, welches in einer 1:1-Getriebeübersetzung mit einem Abtriebsrad mit parallel zur Laserkopf-Längsachse verlaufender Abtriebswelle verbunden ist, wobei die optische Faser in einem Bogen von der Laserkopf-Längsachse über die Abtriebswelle in den Laserkopf geführt ist.

Um bei dieser Ausführungsform eine einfache Änderung des Neigungswinkels des Laserstrahls zu ermöglichen, ist die Durchführung vorzugsweise für mehrere Positionen für das Abtriebsrad ausgelegt, die sich in ihrem Abstand von der Laserkopf-Längsachse unterscheiden.

Der Abstand des Abtriebsrades von der Längsachse bestimmt den Auftreffpunkt des kollimierten Laserstrahls auf der Fokussierlinse. Je weiter der Auftreffpunkt von der optischen Hauptachse entfernt ist, umso stärker ist die Ablenkung des Laserstrahls in Richtung auf die optische Hauptachse und umso größer ist der Neigungswinkel α zwischen der Laserkopf-Längsachse und dem Laserstrahl.

### Ausführungsbeispiel

Nachfolgend wird die Erfindung anhand von Ausführungsbeispielen und einer Zeichnung näher erläutert. Dabei zeigt in schematischer Darstellung im Einzelnen:
- Figur 1: eine erste Ausführungsform eines optischen Systems zur Führung und Formung eines Laserstrahls für den Einsatz in einem Laserkopf gemäß der Erfindung in einer Seitenansicht (ohne Gehäuse des Laserkopfes),
- Figur 2: das optische System von Fig. 1 mit Laserkopf-Gehäuse,
- Figur 3: den Laserkopf von Fig. 1 in einer Draufsicht von oben,

- Figur 4: eine zweite Ausführungsform eines optischen Systems zur Führung und Formung eines Laserstrahls für den Einsatz in einem Laserkopf gemäß der Erfindung in einer Seitenansicht (ohne Laserkopf),
- Figur 5: das optische System von Fig. 4 mit Laserkopf-Gehäuse und
- Figur 6: das System zur Führung und Formung des Laserstrahls von Figur 4 in einer Draufsicht.

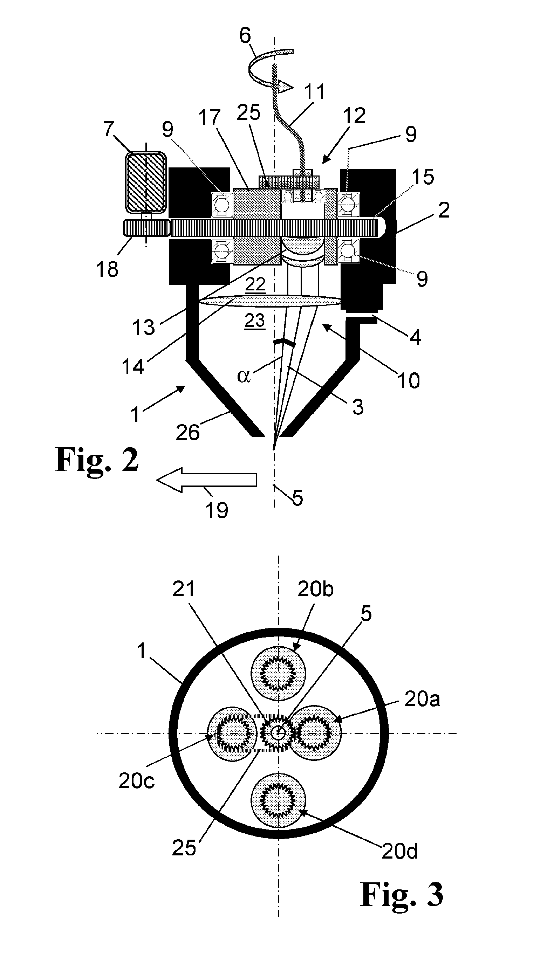

Figur 2 zeigt einen Laserkopf 1 mit einem Gehäuse 2 und einer Düse 26, durch die ein Schneidgas und ein zur Vertikalen geneigter und fokussierter Laserstrahl 3 austreten. Für die Zufuhr des Schneidgases weist das Gehäuse 2 einen Zufuhrstutzen 4 auf.

Innerhalb des Gehäuses 2ist ein optisches System 10 für die Zuführung und Formung des Laserstrahls 3 vorgesehen, die hier auch als "Umlenkeinheit" bezeichnet wird. Das optische System 10 umfasst ein Lagergehäuse 17 zur Aufmahne eines Linsensystems, das als Kollimator 13 dient, eine optische Faser 11 für die Zuführung der Laserstrahlung über eine Durchführung, der insgesamt die Bezugsziffer 12 zugeordnet ist und die mit dem Lagergehäuse 17 fest verbunden ist, sowie eine Fokussierlinse 14.

Die Komponenten des Systems 10 mit den Bezugsziffern 11, 12, 13 und 17 sind innerhalb des Gehäuses 2 um die Längsachse 5 des Laserkopfes 1 rotierbar, wie dies der Richtungspfeil 6 andeutet. Die Rotierbarkeit dieser System-Komponenten wird durch Drehlager 9, einen Elektromotor 7 und ein Getriebe bewirkt.

Das Getriebe umfasst ein Zahnrad 15, dessen Drehachse koaxial zur Laserkopf-Längsachse 5 verlauft, und das das Lagergehäuse 17 umgibt und mit diesem fest verbunden ist. Das Zahnrad 15 kämmt mit dem Antriebsritzel 18, das mit der Motorwelle des Elektromotors 7 verbunden ist.

Der Laserkopf 1 ist mittels einer (nicht dargestellten) Führungseinheit auf und ab sowie entlang einer Schnittkontur bewegbar wie dies der Richtungspfeil 19 andeutet. Das Gehäuse 2 ist jedoch nicht um die Längsachse 5 rotierbar, sondern mit der Führungseinheit fest verbunden.

Die Fokussierlinse 14 ist innerhalb des Gehäuses 2 fixiert und dichtet zusammen mit der Linsenfassung den oberen Gehäuseraum 22 mit den Komponenten des optischen Systems 10 gegenüber dem Gasraum 23 ab.

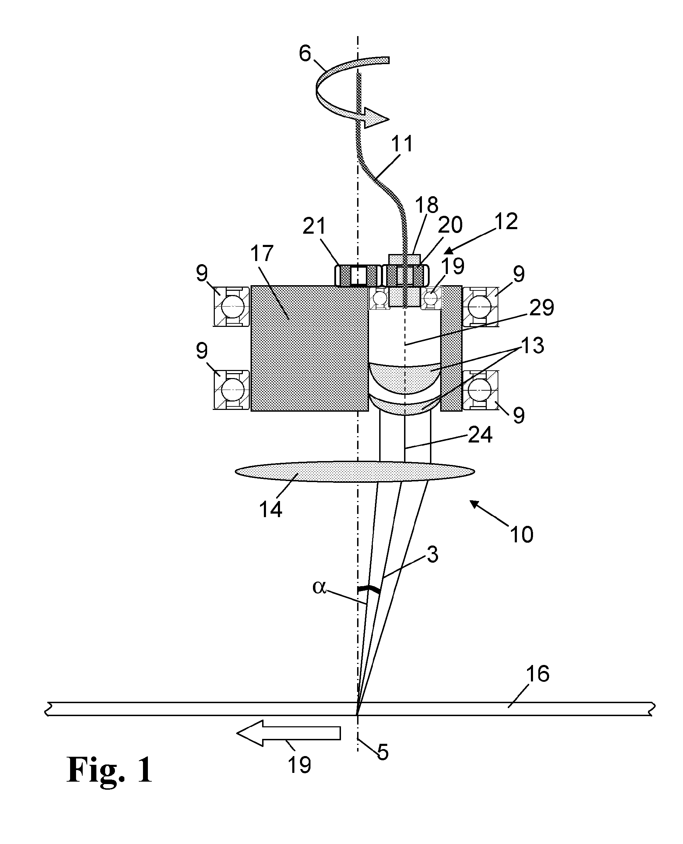

Figur 1 zeigt die Drehlager 9 sowie das optische System 10 im vergrößerten Maßstab. Das optische System 10 umfasst eine Faser 11 für die Zuführung der Laserstrahlung über eine Durchführung, der insgesamt die Bezugsziffer 12 zugeordnet ist, ein Linsensystem, das als Kollimator 13 dient, sowie eine Fokussierlinse 14. Das Lagergehäuse 17 und die daran oder darin fixierten SystemKomponenten 11, 12, 13 und 17 sind um die Längsachse 5 rotierbar, wie oben bereits näher erläutert; die Fokussierlinse 14 ist innerhalb des Laserkopfes feststehend.

Der Laserstrahl gelangt über die Faser 11 auf den Kollimator 13, wird dort kollimiert, so dass ein paralleler Laserstrahl 24 mit einem Durchmesser von 20 mm auf die Fokussierlinse 14 trifft, und zwar versetzt zu deren optischer Hauptachse, die der Längsachse 5 entspricht.

Die Fokussierlinse 14 wirkt als Sammellinse und lenkt daher den parallelen Laserstrahl 15 in Richtung auf ihre optische Hauptachse (=Längsachse 5) ab und fokussiert ihn gleichzeitig auf das Werkstück 16. Zwischen der Längsachse 5, die gleichzeitig der Flächennormalen auf die Werkstückoberfläche entspricht und der Einfallsrichtung des abgelenkten Laserstrahls 3 stellt sich ein Neigungswinkel α ein, der üblicherweise im Bereich von 3 bis 10° C liegt.

Die Schnittrichtung ist in Figur 1 schematisch durch den Richtungspfeil 19 dargestellt. Die Neigung des Laserstrahls 3 in Bezug auf die Schnittrichtung 19 ist so, dass sich ein "abhebendes Schneiden" ergibt, bei dem der Fokus des Laserstrahls 3 dem parallel einfallenden Laserstrahl 15 vorauseilt.

Die Drehdurchführung 12 umfasst eine an der Oberseite des Laserkopfes 1 drehbar in Kugellagern 19 gelagerte Hülse 18. Die Hülse 18 ist wiederum in der Drehachse eines Zahnrades 20 fixiert, das an der Oberseite des Laserkopfes 1 angeordnet ist, und das über einen Riemenantrieb mit einem weiteren Zahnrad 21 verbunden ist. Das Zahnrad 21 ist raumfest und seine Mittelachse entspricht der Längsachse 5 des Laserkopfes 1. Die Drehachse des Zahnrades 20 ist seitlich versetzt dazu angeordnet und verläuft parallel zur optischen Hauptachse 29 des Kollimators 13.

Die Zahnräder 20 und 21 haben den gleichen Durchmesser, so dass sich eine 1:1-Getriebeübersetzung ergibt. In Figur 2 ist der um die Zahnräder 20; 21 umlaufende Zahnriemen 25 erkennbar.

Die optische Faser 11 wird zunächst in der Längsachse 5 des Laserkopfes zugeführt und in einem Bogen zur Innenbohrung der Hülse 18 geführt, durch die hindurch es sich vollständig erstreckt.

Eine Drehung der Komponenten 11, 12, 13 und 17 des optischen Systems 10 um die Längsachse 5 bewirkt eine Umlaufbewegung des Zahnrades 20 um das raumfeste Zahnrad 21. Das Zahnrad 20 beschreibt dabei einen Kreis um die Längsachse 5 ohne sich selbst - infolge der 1:1-Übersetzung des Getriebes - um seine Drehachse zu drehen. Daher führt diese Drehbewegung nicht zu einer Verdrillung der Faser 11, dessen Bogen die Drehung einfach mitmacht.
Figur 3 zeigt schematisch eine Draufsicht auf den Laserkopf gemäß Figur 1, wobei das zentrale Zahnrad 21 dargestellt ist sowie unterschiedliche Positionen 20A, 20B, 20C, 20D für das Zahnrad 20, die sich jeweils in ihrem Abstand zur Längsachse 5 (die in dieser Darstellung senkrecht zur Papierebene verläuft) unterscheiden. Je nachdem, welches der Zahnradpositionen 20A, 20B, 20C, 20D die Hülse 18 mit der Faser 11 aufnimmt und mit dem zentralen Zahnrad 21 verbunden ist, ergeben sich unterschiedliche Auftreffpunkte des parallelen Laserstrahls 15 auf die Fokussierlinse 14 und damit unterschiedliche Neigungswinkel α. Auf diese Weise ist der Neigungswinkel α des fokussierten Laserstrahls 3 einfach variierbar.

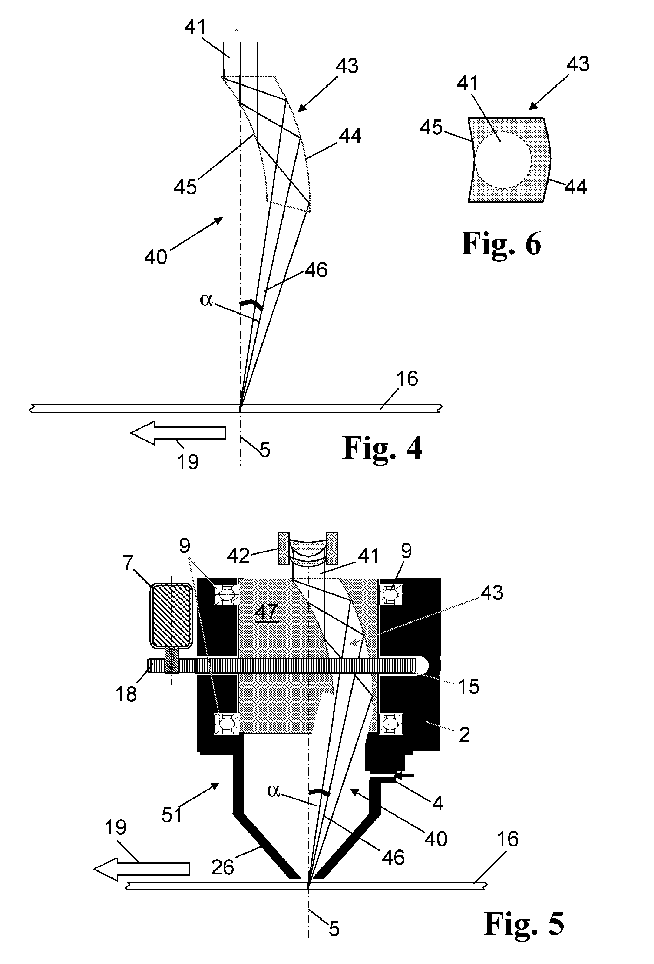

Figur 4 zeigt schematisch ein anderes optisches System 40 zur Fokussierung eines parallelen Laserstrahls 41 auf ein Werkstück 42. Das optische System 40 umfasst ein an Lagern 9 drehbar gelagertes Lagergehäuse 47, in dem ein optischer Hohlleiter 43 mit fester Geometrie ausgebildet ist. Der Hohlleiter 43 weist zwei verspiegelte, sich gegenüberliegende Wandungen 44, 45 auf, die jeweils eine Biegung und eine Krümmung in gleicher Richtung aufweisen. Die eine Wandung 44 ist für den auftreffenden Laserstrahl 41 konkav gekrümmt wirkt als Sammellinse, und die andere Wandung 45 ist konvex gekrümmt und wirkt als Zerstreuungslinse.

Die Biegung des Hohlleiters 43 und die Krümmung sind so gestaltet, dass sich aufgrund der Gesetzmäßigkeiten der optischen Abbildung eine Fokussierung des kollimierten Laserstrahls 41 und eine Verkippung gegenüber der Längsachse 5 um den Winkel α einstellt.

Hierzu wird der Laserstrahl über eine (in der Figur nicht dargestellte optische Faser) koaxial zur Laserkopf-Längsachse 5 dem Kollimator 42 zugeführt. Über den Kollimator 42 wird der parallele Laserstrahl 41 mit einem Strahldurchmesser von 20 mm in den Hohlleiter 43 eingeführt und innerhalb des Hohlleiters 43 mehrfach total reflektiert und infolge der Krümmung und Biegung des Hohlleiters 43 gleichzeitig auf das Werkstück 16 fokussiert. Der fokussierte Laserstrahl 46 ist in Bezug auf die Längsachse 5 in einem Winkel α geneigt, der im Bereich von 3 bis 10° liegt.

Die Draufsicht auf den Hohlleiter 43 von Figur 6 zeigt die Krümmungen der verspiegelten Wandungen 44 und 45 an einem Beispiel. Die in dieser Ansicht erkennbaren Krümmungen wirken auf den kollimierten Laserstrahl 41 wie eine Sammellinse und bewirken infolge der Reflexionen über die Länge des Hohlleiters 43 die Fokussierung des Laserstrahls 41. Beide Wandungen 44, 45 weisen somit zwei sich überlagernde Krümmungen auf, die die Fokussierung und die Verkippung des Laserstrahls 41 bewirken.

Figur 5 zeigt das optische System 40 mit dem Hohlleiter 43 innerhalb eines Laserkopfes 51. Gleiche Bezugsziffern wie bei den Figuren 2, 4 und 5 bezeichnen hier äquivalente oder gleiche Bauteile. Auf die obigen Erläuterungen wird verwiesen.

Der Hohlleiter 43 übernimmt hierbei die Funktion einer Fokussierlinse und er bewirkt gleichzeitig die gewünschte Ablenkung des Laserstahls. Der Laserstrahl 41 tritt koaxial zur Längsachse 5 in einen oberhalb und außerhalb des Laserkopfes 41 angeordneten Kollimator 42 ein. Der kollimierte Laserstrahl 41 verläuft demnach koaxial zur Längsachse 5 und tritt in den Hohlleiter 43 ein. Dort wird er fokussiert und umgelenkt, so dass er als fokussierter Laserstrahl 46 durch die Düse 26 auf das Werkstück 16 auftrifft.

Zum Schneiden einer gekrümmten Kontur wird das Lagergehäuse 47 mittels des Motors 7, Getriebe 15, 18 und Drehlager 9 mitsamt dem darin ausgebildeten Hohlleiters 43 in Schnittrichtung 19 um die Längsachse 5 gedreht. Der Kollimator 42 und das Gehäuse 2 werden dabei nicht gedreht, sondern nur mit dem Laserkopf 51 entlang der Schnittkontur mitbewegt.

## Patentansprüche

1. Verfahren zum thermischen Bearbeiten, insbesondere zum thermischen Schneiden, eines Werkstücks (16) mit einem Laserstrahl, welcher mittels einer Laserquelle erzeugt und einem eine Längsachse aufweisenden und relativ zur Oberfläche des Werkstücks (16) einem in Bearbeitungsrichtung (19) bewegbaren Laserkopf (1; 51) zugeführt wird, und über eine Düse (26) in Richtung auf das Werkstück (16) austritt, wobei in dem Laserkopf (1; 51) mindestens ein optisches Umlenkelement (10; 40) vorgesehen ist, mittels dem der Laserstrahl so umgelenkt wird, dass er ― in Bearbeitungsrichtung (19) gesehen - mit der Flächennormalen auf die Werkstück-Oberfläche einen Verkippungswinkel (α) ungleich 0 Grad einschließt, **dadurch gekennzeichnet, dass** der Laserstrahl dem Laserkopf (1,51) mittels einer optischen Faser (11) zugeführt und der Laserstrahl kollimiert wird, das Umlenkelement (10, 40) seitlich versetzt zur Laserkopf-Längsachse (5) durchläuft und mittels diesem auf die Werkstück-Oberfläche umgelenkt und gleichzeitig fokussiert wird.

2. Verfahren nach Anspruch 1, **dadurch gekennzeichnet, dass** das Umlenkelement (10) eine Fokussierlinse (14) umfasst, welche der kollimierte Laserstrahl (24) versetzt zur Laserkopf-Längsachse (5) durchläuft und dabei auf die Werkstück-Oberfläche umgelenkt und gleichzeitig fokussiert wird, wobei die Fokussierlinse (14) eine Linsen-Hauptachse aufweist, die koaxial zur Laserkopf-Längsachse (5) verläuft.

3. Verfahren nach Anspruch 1 oder 2, **dadurch gekennzeichnet, dass** der Laserstrahl dem Laserkopf (1; 51) seitlich versetzt zur Laserkopf-Längsachse (5) zugeführt wird.

4. Verfahren nach einem der vorhergehenden Ansprüche, **dadurch gekennzeichnet, dass** der Laserstrahl dem Laserkopf (1) mittels der optischen Faser (11) über eine Durchführung (12) zugeführt wird, die ein Getriebe mit einem koaxial zur Laserkopf-Längsachse (5) rotierbaren Antriebsrad (21) umfasst, welches in einer 1:1-Getriebeübersetzung mit einem Abtriebsrad (20) mit parallel zur Laserkopf-Längsachse (5) verlaufender Abtriebswelle verbunden ist, wobei die optische Faser (11) in einem Bogen von der Laserkopf-Längsachse (5) über die Abtriebswelle in den Laserkopf (1) geführt ist.

5. Verfahren nach einem der vorhergehenden Ansprüche, **dadurch gekennzeichnet, dass** der Laserstrahl in einem Kollimator (13) kollimiert wird, der innerhalb der Laserkopfes (1) und seitlich versetzt zur Laserkopf-Längsachse (5) angeordnet ist.

6. Verfahren nach Anspruch 1, **dadurch gekennzeichnet, dass** das Umlenkelement (40) mindestens eine konkave gekrümmte spiegelnde Fläche (44) und dieser gegenüberliegend eine konvex gekrümmte spiegelnde Fläche (45) aufweist, wobei der kollimierte Laserstrahl an der konkav gekrümmten Fläche durch Totalreflexion auf die Werkstück-Oberfläche umgelenkt, und dabei gegenüber der Laserkopf-Längsachse (5) verkippt und gleichzeitig infolge der Flächenkrümmung fokussiert wird.

7. Verfahren nach Anspruch 6, **dadurch gekennzeichnet, dass** die konkav und konvex gekrümmten, spiegelnden Flächen (44; 45) die Innenwandung eines gekrümmten optischen Hohlleiters 43 bilden.

8. Vorrichtung zum thermischen Bearbeiten eines Werkstücks (16) mit einem Laserstrahl, insbesondere zum thermischen Schneiden, umfassend eine Laserquelle zur Erzeugung des Laserstrahls, einem eine Längsachse (5) aufweisenden Laserkopf (1; 51), der relativ zur Oberfläche des Werkstücks (16) in Bearbeitungsrichtung bewegbar ausgebildet ist, und der mit einer Düse (26) versehen ist, durch welche der Laserstrahl in Richtung auf das Werkstück (16) austritt, wobei der Laserkopf (1; 51) mindestens ein optisches Umlenkelement (10; 40) enthält, mittels dem der Laserstrahl so umlenkbar ist, dass er mit der Laserkopf-Längsachse (5) einen Verkippungswinkel (α) ungleich 0 Grad einschließt, **dadurch gekennzeichnet, dass** zur Zuführung des Laserstrahls zum Laserkopf (1,51) eine optische Faser (11) und zur Kollimierung des Laserstrahls ein Kollimator (13) vorgesehen sind, und dass der Laserstrahl das Umlenkelement (10, 40) seitlich versetzt zur Laserkopf-Längsachse (5) durchläuft, wobei das Umlenkelement (10, 40) geeignet ist, den Laserstrahl auf die Werkstück-Oberfläche umzulenken und gleichzeitig zu fokussieren.

9. Vorrichtung nach Anspruch 8, **dadurch gekennzeichnet, dass** das Umlenkelement (10; 40) eine Fokussierlinse (14) umfasst, welche der kollimierte Laserstrahl versetzt zur Laserkopf-Längsachse (5) durchläuft und dabei auf die Werkstück-Oberfläche umgelenkt und gleichzeitig fokussiert wirdund die eine Linsen-Hauptachse aufweist, die koaxial zur Laserkopf-Längsachse (5) verläuft.

10. Vorrichtung nach Anspruch 8 oder 9, **dadurch gekennzeichnet, dass** die Zuführung des Laserstrahls zum Laserkopf (1) seitlich versetzt zur Laserkopf-Längsachse (5) angeordnet ist.

11. Vorrichtung nach einem der Ansprüche 8 bis 10, **dadurch gekennzeichnet, dass** der Laserstrahl dem Laserkopf (1) mittels der optischen Faser (11) über eine Durchführung (12) zugeführt wird, die ein Getriebe (20; 21) mit einem koaxial zur Laserkopf-Längsachse (5) rotierbaren Antriebsrad (21) umfasst, welches in einer 1:1-Getriebeübersetzung mit einem Abtriebsrad (20) mit parallel zur Laserkopf-Längsachse (5) verlaufender Abtriebswelle verbunden ist, wobei die optische Faser (11) in einem Bogen von der Laserkopf-Längsachse (5) über die Abtriebswelle in den Laserkopf (1) geführt ist.

12. Vorrichtung nach Anspruch 11, **dadurch gekennzeichnet, dass** die Durchführung (12) für mehrere Positionen (20a; 20b ; 20c; 20d) für das Abtriebsrad (20) ausgelegt ist, die sich in ihrem Abstand von der Laserkopf-Längsachse (5) unterscheiden.

13. Vorrichtung nach einem der Ansprüche 8 bis 12, **dadurch gekennzeichnet, dass** ein Kollimator (13) zu Kollimierung des Laserstrahls vorgesehen ist, der innerhalb der Laserkopfes (1) und seitlich versetzt zur Laserkopf-Längsachse (5) angeordnet ist.

14. Vorrichtung nach Anspruch 8, **dadurch gekennzeichnet, dass** das Umlenkelement (40) mindestens eine konkave gekrümmte spiegelnde Fläche (44) und dieser gegenüberliegend eine konvex gekrümmte spiegelnde Fläche (45) aufweist, wobei die konkav gekrümmte spiegelnde Fläche dazu dient, den kollimierten Laserstrahl durch Totalreflexion auf die Werkstück-Oberfläche umzulenken und dabei gleichzeitig infolge der Flächenkrümmung zu fokussieren.

15. Vorrichtung nach Anspruch 14, **dadurch gekennzeichnet, dass** die konkav und konvex gekrümmten, spiegelnde Flächen (44; 45) eine Innenwandung eines gekrümmten optischen Hohlleiters (43) bilden.
